# EUROPEAN PATENT SPECIFICATION

(11) **EP 2 402 150 B1**
(45) Date of publication and mention of the grant of the patent: **21.08.2013**
(21) Application number: 10006865.9
(22) Date of filing: 02.07.2010
(51) Int. Cl.: B32B 5/16, B32B 5/18, B32B 5/24, B32B 5/26, B32B 13/14, E04B 1/80, F16L 59/00

(54) **Insulating construction element, use of an insulating construction element and method for manufacturing an insulating construction element**
Isolierendes Bauelement, Verwendung eines isolierenden Bauelements und Verfahren zur Herstellung eines isolierenden Bauelements
Élément de construction d'isolation, utilisation d'un élément de construction d'isolation et procédé de fabrication d'un élément de construction d'isolation

(43) Date of publication of application: 04.01.2012
(73) Proprietor: Rockwool International A/S, 2640 Hedehusene (DK)
(72) Inventor: Skovgaard Joergensen, Kristian, 4000 Roskilde (DK); Ghijzen, Cor J.M., 6114 MZ Susteren (NL); Bauer, Ulrich, 65843 Sulzbach (DE)
(74) Representative: Stenger, Watzke & Ring

(56) References cited:
- WO-A1-2008/110818
- WO-A2-2008/146320
- DE-A1- 19 533 564
- US-A- 5 656 195
- US-A1- 2003 077 438
- US-A1- 2006 125 158

## Description

The invention relates to an insulating construction element made of at least one board comprising fibres, aerogel particles and at least one binder. The invention relates further to the use of an insulating construction element made of at least one board comprising components fibres, aerogel particles and at least one binder. Finally the invention relates to a method for manufacturing an insulating construction element.

Insulating construction elements made of at least one board consisting of fibres, aerogel particles and at least one binder are for example known from US 2003/0077438 A1 which describes a composite material that contains 5 to 97%-vol aerogel particles, at least one binder and at least one fibre material, the diameter of the aerogel particles being ≥ 0.5 mm. Furthermore this prior art discloses a process for manufacturing such a composite material and the use of such a composite material.

According to the prior art a composite material is manufactured in that the aerogel particles and the fibre materials are mixed with a binder, and the mixture is subjected to shaping and hardening. The fibre material may contain glass fibres as the principle component. Nevertheless, this pre-known composite material has densities of above 250 kg/m³ and is therefore not useful for a lot of applications in the building industries because of its weight. The handling of boards being made of such a composite material has the disadvantage that handling such a board by one person means that the board has to be small in size and therefore a lot of boards are needed for example to built-up a layer of insulating material. Such layers of insulating material are often used in the area of façades of buildings or in the inner parts of buildings. Nevertheless using such boards being small in its size means that a lot of fixing material has to be used and that a lot of joints will exist which are at least thermal bridges which have to be avoided.

It is one object of the invention to provide an insulating construction element which avoids the before mentioned drawbacks of the prior art and which is especially easy to handle, easy to produce and which has high insulation properties.

According to the invention this object is achieved with an insulating construction element made of at least one board comprising fibres, aerogel particles and at least one binder, whereby 20 to 40 per cent by weight mineral wool fibres, 45 to 70 per cent by weight aerogel particles and 8 to 12 per cent by weight binder are pressed and cured to the board having a density of 130 kg/m³ to 200 kg/m³.

Such an insulation construction element can be used in a beneficial way as an insulating element for internal insulation of window and door openings, in areas behind radiators, as insulation under floors and/or for external insulation of building façades. Such an insulating construction element can be manufactured according to the invention in that a mixture of 20 to 40 per cent by weight fibres, especially mineral wool fibres, 45 to 70 per cent by weight aerogel particles and 8 to 12 per cent by weight of at least one binder is provided, the mixture is pressed into the shape of a board having a density of 130 kg/m³ to 200 kg/m³ and the board is finally cured.

A board according to the invention has a beneficial vapor permeability which makes the board suitable for internal insulation purposes. Furthermore such boards can be easily and advantageously be used for insulation purposes from inside for example for refurbishment of buildings. The high insulation value which can be achieved with such a board has the advantage that boards with small thickness can be produced having beneficial insulation properties. Such boards can therefore be used for purposes for which already well-known boards are not applicable. The net interior space will not be reduced much by using such insulation boards. Especially applications for internal insulation including window and door openings, the space behind radiators and other applications, where the room for insulation is very much limited can be insulated with high efficiency by using the insulating construction element according to the invention. Of course the insulating construction element according to the invention can also be used in the area of external insulation and as insulation under floors without drawbacks.

According to a further feature of the invention the board has a thermal conductivity λ of less than 0.022 W/(mK). To achieve an element according to the invention wherein the board has a density of 180 kg/m³ and a thermal conductivity λ of 0.019 W/(mK) or less and wherein the board comprises up to 30 per cent by weight fibres, especially mineral wool fibres, 50 to 70 per cent by weight aerogel particles, especially hydrophobic aerogel particles and up to 10 per cent by weight binder are mixed and are shaped to a board which is finally cured.

At least a part of the fibres can be other than mineral wool fibres.

A further feature of the insulating construction element according to the invention is that the binders are dry binders, especially a polar binder. The aerogel particles are hydrophobic, which ensures that the binder does not smear onto the surface of the aerogel particles, which would have a detrimentally fact on the thermal conductivity. Polar binders, such as Novolac ® dry binders do not participate in binding the small-sized aerogel particles, which are highly non-polar. This has the effect that less binders are used for the provision of composites of adequate strength than is expected. Furthermore the aerogel particles are kept entrapped in a fibre "cage", where the fibres are connected by binder at crossings between fibres. Thereby the aerogel particles are kept inside the board.

Curing insulating construction elements in the shape of boards is time consuming because of the very low thermal conductivity meaning that it is difficult to transfer heat into the centre of the boards for curing of the binder in a heat press. Therefore according to a further feature of the invention the board has a thickness of less than 30 mm, especially of 20 mm or of 10 mm. Such boards can be easily cured in a short time. Having a low thermal conductivity of A 0.019 W/(mK) such boards can be used in the before mentioned areas of limited space. Furthermore such boards with small thickness can be easily fixed to each other, especially by gluing to achieve insulating construction elements having a higher thickness of for example 40 mm to 200 mm. Such a production of insulating construction elements with higher thicknesses is more efficient and it has to be taken into account that the curing time of insulating construction elements made of the before mentioned components increases steeply with the thickness of the board to be manufactured.

The board may be provided with at least one covering layer being connected to at least one main surface of the board. As a covering layer a web, especially a thin woven or non-woven web made of glass fibres is of advantage. Such a covering layer will provide extra strength to the board and further facilitate subsequent gluing of two boards together or to a further construction element, such as a wall, for example made of plaster boards and/or usually used bricks and/or concrete. The covering layer has further the advantage that any potential dust released from the board may be reduced by such a covering layer, limiting any potential annoyance to the person handling or installing the board. Moreover the board may have an appearance of increased quality to the customer.

According to the invention such a covering layer may also function as a carrier web during production of the boards reducing the risk of damage to the boards during manufacturing them, especially prior to pressing and curing of the mixture into boards. A board according to the invention connected to a gypsum board forms a sandwich element which can be installed very quickly and with a minimum of subsequent finishing e. g. covering the system with a coating made of wallpaper and/or a paint. It is of particular interest for energy refurbishment of existing buildings that the installation of the insulation will provide at least possible disturbances, both with regard to time consumption and noise, dust release etc. during installation to the people living or working in the building. Because of the low density of the insulating construction element according to the invention together with the good thermal insulation properties which have the effect that the insulating construction element can be produced with a small thickness such boards can be used with gypsum boards of normal thickness without increasing the weight of such thermal insulation composite systems in a way that it can be easily handled by only one person.

On the other hand the insulating construction elements according to the invention can be easily installed to inner walls, for example by gluing, and subsequently provided with a finishing layer, such as a render. An insulating construction element according to the invention has a surface which is appropriate for the application of render to the boards.

Finally an insulating construction element according to the invention with the specification of the following table is of advantage:

| **Parameter** | **Value** | **Tolerance** |
|---|---|---|
| Density | 180 kg/m³ | ± 10% |
| Lambda | 19 m W/mK | CEN |
| Compression strength | ≥ 5 kPa | |
| Delaminating strength | ≥ 1 kPa | |
| Thickness | 10 mm, 20 mm | ± 1.0 mm |
| Length | 1200 mm | ± 2.0 mm |
| Width | 600 mm | ± 2.0 mm |
| Covering web | One/both sides | |

The aerogel particulate material can be any type of aerogel. In particular, the aerogel can be organic or inorganic. In view of their fire-resistant properties, inorganic aerogels are often preferred. Organic aerogels include carbon aerogels and polymeric aerogels, which generally are cheaper than inorganic aerogels, and further generally have better insulation properties.

Prototypes were made using Cabot nanogel™ fine particle aerogel with favourable results.

The invention will be described in the following by way of example and with reference to the drawing in which
- Fig. 1: is a schematic drawing of a first embodiment of an insulating construction element.
- Fig. 2: is a schematic drawing of a second embodiment of an insulating construction element.
- Fig. 3: is a schematic drawing of a third embodiment of an insulating construction element in connection with an inner wall of a building.
- Fig. 4: is a photo of a board according to the invention.

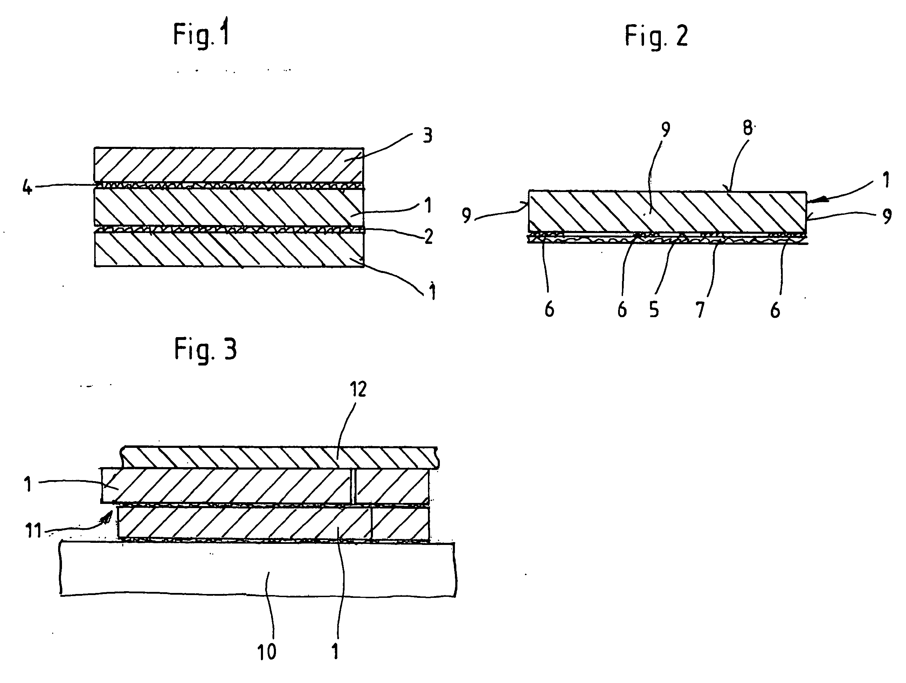

Fig. 1 shows an insulating construction element made of two boards 1 each consisting of 30 per cent by weight mineral wool fibres, 60 per cent by weight hydrophobic aerogel particles and 10 per cent by weight polar binder. Each board 1 has a density of 135 kg/m³ and a thermal conductivity λ of 0.019 W/(mK). Furthermore each board 1 has a thickness of 20 mm. The boards 1 are fixed to each other by a layer 2 of an adhesive which can be a hot melt adhesive in form of a thermal plastics applied in molten form which solidifies on cooling to form strong bonds between the boards 1. The layer 2 can cover the big surface of the boards 1 in total or partly.

The insulating construction element according to figure 1 furthermore consists of a layer of a gypsum board 3 which is fixed to the big surface of one of the boards 1 by a further adhesive 4 which covers the big surface of the board 1 in total or partly.

The layer 2 between the boards 1 and the layer of adhesive 4 between the board 1 and the gypsum board 3 can be arranged on the big surfaces of the board 1 and/or the gypsum board 3 in the form of spots and/or stripes.

Figure 2 shows a further embodiment of the insulating construction element made of one board 1 having a big surface 5 on which stripes of an adhesive are arranged and on which stripes 6 a covering layer in form of a web 7 made of glass fibres is fixed.

The board 1 has the components according to the boards 1 used in the embodiment according to figure 1. The insulating construction element according to figure 2 can also have a second web 7, e.g. thin woven or non-woven glass fibre web, on the big surface 8 or on one of the lateral surfaces 9 of the board 1.

Figure 3 shows the use of a third embodiment of an insulating construction element according to the invention on an inner wall 10 of a building. The insulating construction element according to figure 3 consists of two boards 1 being arranged offset providing a shoulder 11 communicating with a shoulder 11 of a neighboring insulating construction element. Figure 3 shows two boards 1 being arranged offset to each other in the longitudinal direction of the boards 1. Nevertheless, the boards 1 being glued together can be arranged offset in two directions being arranged perpendicular to each other. The advantage of such an insulating construction element is that thermo bridges between neighboring insulating construction elements are avoided.

Each board 1 according to the embodiment of figure 3 consists of the components according to the embodiments of figure 1 or 2. The boards 1 are fixed together by a layer 2 of an adhesive according to the description before.

After fixing the insulating construction elements to the inner wall 10, for example by gluing the boards 1 onto the inner wall so the outer side of the boards 1 are covered by a render 12. The boards 1 have a thickness of 20 mm whereas the render 12 has a thickness of 2 up to 3 mm. Finally at least the board 1 being covered by the render 12 has a delaminating strength of 1 kPa.

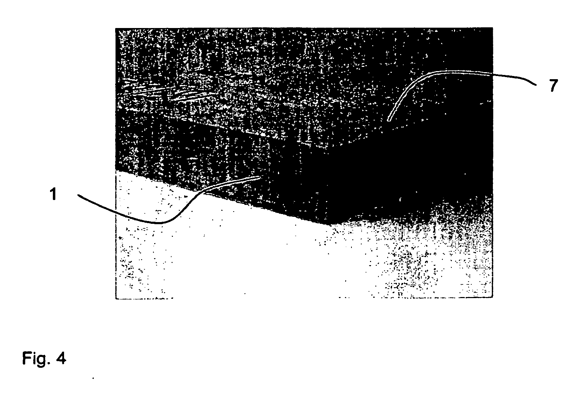

In Figure 4 can be seen a prototype of a board 1 according to the invention. The board 1 comprises a surface covering in the form of a web 7, which here is a non-woven glass fibre web or sheet. As can be seen the board has an open, sponge-like appearance, and the board is able to withstand some compression, depending on the density, binder content etc. In some embodiments it may be advantageous that the boards deform a little, because this flexibility may be used to absorb any unevenness of the surface that the boards are applied to. Measurements on prototype boards can be seen in Table 1 below.

**Table 1**

| | | Compression EN 828 | | | | | | | | | Delamination | | Thermal conductivity FOX 600 | | | Thermal conductivity FOX 200 | |
|---|---|---|---|---|---|---|---|---|---|---|---|---|---|---|---|---|---|
| | | | | Deformation at | | | | | | | | | | | | | |
| No. | Ignition loss | No | Density (a) | 2.5kN | 5,0kN | 7,5KN | 10,0kN | 12.5kN | 15,0kN | Ec | Density (a) | Sigma d | Lambda₁₀ | density (a) | After 1h | Lambda₁₀ | density (a) |
| | % | mm | kg/m³ | mm | mm | mm | mm | mm | mm | kPa | kg/m³ | kPa | mW/mK | kg/m³ | mW/mK | mW/mK | kg/m³ |
| 2-24 | 13.21 | 0,6 | 167 | 0,58 | 1,49 | 2,00 | 2,45 | 2,92 | 3,51 | 1187 | 158 | 5.1 | 19,15 | 158 | 19,44 | 19.21 | 155 |
| 2-54 | 11.01 | 1.6 | 153 | 1.50 | 2.44 | 3.15 | 3.70 | | | 1112 | 164 | 2.6 | 18.41 | 160 | 18,84 | 18.54 | 160 |
| 2-57 | 12.18 | 0,8 | 154 | 1.44 | 2.22 | 2,90 | 3,61 | | | 825 | 155 | 2,2 | 19,38 | 155 | 14,49 | 19,63 | 152 |
| 2-61 | 12.45 | 0,7 | 144 | 1.41 | 2.15 | 2,93 | 3.78 | | | 729 | 156 | 4.1 | 19.35 | 145 | 19,44 | 19,51 | 144 |
| 2-62 | 12.09 | 1,1 | 169 | 1.93 | 1,70 | 2,25 | 2,72 | 3,12 | 3,52 | 1413 | 158 | 2,2 | 18,48 | 170 | 18,81 | 18,42 | 170 |
| 2-69 | 12.55 | 0,7 | 142 | 1.48 | 2,36 | 3,26 | | | | 653 | 154 | 3.1 | 19,24 | 148 | 19,44 | 19,78 | 148 |
| 2-70 | 1222 | 0,6 | 165 | 1.04 | 1,69 | 2,22 | 2,78 | 3,37 | 3,97 | 1012 | 182 | 5.9 | 18,56 | 174 | 18,83 | 18,46 | 173 |
| Avg | 12,24 | 0,9 | 156 | 1,25 | 2,01 | 2,67 | 3,17 | 3,14 | 3,67 | 990 | 161 | 3,6 | 18,9 | 159 | 19,2 | 19,1 | 157 |
| Stdev | 0.66 | 0,4 | 11 | 0,26 | 0,37 | 0,50 | 0,59 | 0,23 | 0,28 | 271 | 10 | 1.5 | 0.4 | 11 | 0.3 | 0.6 | 11 |
| n | 7 | 7 | 7 | 7 | 7 | 7 | 6 | 3 | 3 | 7 | 7 | 7 | 7 | 7 | 7 | 7 | 7 |
| Lambda measurements are performed on 20 mm samples in the RI lambda apparatus. | | | | | | | | | | | | | | | | | |

### Reference Numeral

- 1: board
- 2: layer
- 3: gypsum board
- 4: adhesive
- 5: surface
- 6: stripes
- 7: web
- 8: surface
- 9: lateral surface
- 10: inner wall
- 11: shoulder
- 12: render

## Claims

1. An insulating construction element made of at least one board comprising fibres, aerogel particles and at least one binder, whereby 20 to 40 per cent by weight mineral wool fibres, 45 to 70 per cent by weight aerogel particles and 8 to 12 per cent by weight binder are pressed and cured to the board having a density of 130 kg/m³ to 200 kg/m³.

2. An element according to claim 1, wherein the board has a thermal conductivity λ of less than 0.022 W/(mK).

3. An element according to any one of the claims above, wherein the board has a density of 180 kg/m³ and a thermal conductivity λ of 0.019 W/(mK) or less and wherein the board comprises up to 30 per cent by weight fibres, especially mineral wool fibres, 50 to 70 per cent by weight aerogel particles, especially hydrophobic aerogel particles and up to 10 per cent by weight binder.

4. An element according to any one of the claims above, wherein the binder is a dry binder, especially a polar binder.

5. An element according to any one of the claims above, wherein the board has a compression strength of at least 5 kPa and/or a delaminating strength of at least 1 kPa.

6. An element according to claim 1, wherein the board has a thickness of less than 30 mm, especially of 20 mm or of 10 mm.

7. An element according to claim 1, wherein the mineral wool fibres a made of glass fibres and/or stone fibres.

8. An element according to claim 1, wherein at least two boards are fixed to each other, especially by gluing.

9. An element according to claim 1, wherein at least one main surface of the board is connected to a covering layer, such as a web, especially a thin woven or non-woven web made of glass fibres.

10. An element according to claim 1, wherein the board is connected to a gypsum board providing a sandwich element, especially as an insulation composite system.

11. Use of an insulating construction element made of at least one board comprising fibres, aerogel particles and at least one binder, whereby 20 to 40 per cent by weight fibres, especially mineral wool fibres, 45 to 70 per cent by weight aerogel particles and 8 to 12 per cent by weight binder are pressed and cured to the board having a density of 130 kg/m³ to 200 kg/m³ as an insulation element for internal insulation of window and door openings, in areas behind radiators, insulation under floors and/or external insulation of building facades.

12. A method for manufacturing an insulating construction element said method comprising the steps of:
providing a mixture of 20 to 40 per cent by weight fibres, especially mineral wool fibres, 45 to 70 per cent by weight aerogel particles and 8 to 12 per cent by weight of at least one binder,
pressing the mixture into the shape of a board having a density of 130 kg/m³ to 200 kg/m³ and
curing the board.

13. A method according to claim 11, wherein the mixture is collected on a layer forming a carrier web and wherein the mixture is pressed and cure together with the layer forming the carrier web.

14. A method according to claim 11, wherein at least two boards are fixed together after pressing and curing, especially by gluing.

15. A method according to claim 11, wherein at least one board is fixed to a gypsum board to provide a thermal insulation composite system.

## Patentansprüche

1. Isolierendes Bauelement, bestehend aus mindestens einer Fasern, Aerogelpartikel und mindestens ein Bindemittel enthaltenden Platte, wobei 20 bis 40 Gewichtsprozent Fasern, insbesondere M-ineralwollfasern, 45 bis 70 Gewichtsprozent Aerogelpartikel und 8 bis 12 Gewichtsprozent Bindemittel zu der Platte gepresst und gehärtet werden, die über eine Dichte von 130 kg/m³ bis 200 kg/m³ verfügt.

2. Element nach Patentanspruch 1, in dem die Platte ein Wärmeleitvermögen λ von weniger als 0,022 W/(mK) aufweist.

3. Element nach irgendeinem der vorangehenden Patentansprüche-, in dem die Platte über eine Dichte von 180 kg/m³ und ein Wärmeleitvermögen λ von 0,019 W/(mK) oder weniger verfügt und in dem die Platte bis zu 30 Gewichtsprozent Fasern, insbesondere Mineralwollfasern, enthält, 50 bis 70 Gewichtsprozent Aerogelpartikel, insbesondere hydrophobe Aerogelpartikel und bis zu 10 Gewichtsprozent Bindemittel.

4. Element nach irgendeinem der vorangehenden Patentansprüche, in dem das Bindemittel ein Trockenbinder ist, insbesondere ein polares Bindemittel.

5. Element nach irgendeinem der vorangehenden Patentansprüche, in dem die Platte eine Druckfestigkeit von mindestens 5 kPa aufweist und/oder eine Delaminierungsbeständigkeit von mindestens 1 kPa.

6. Element nach Patentanspruch 1, in dem die Platte über eine Dicke von weniger als 30 mm verfügt, insbesondere von 20 mm oder von 10 mm.

7. Element nach Patentanspruch 1, in dem die Mineralwollfasern Glasfasern oder Steinfasern sind.

8. Element nach Patentanspruch 1, in dem mindestens zwei Platten aneinander befestigt sind, insbesondere durch Kleben.

9. Element nach Patentanspruch 1, in dem mindestens eine Hauptfläche der Platte mit einer Deckschicht, wie etwa einem Gewebe, verbunden ist, insbesondere einem dünnen gewebten oder nichtgewebtem Material aus Glasfasern.

10. Element nach Patentanspruch 1, in dem die Platte mit einer Gipsplatte verbunden ist, um ein mehrlagiges Element zu schaffen, insbesondere als Isolierungs-Verbundsystem.

11. Gebrauch eines isolierenden Bauelements, bestehend aus mindestens einer Fasern, Aerogelpartikel und mindestens ein Bindemittel enthaltenden Platte, wobei 20 bis 40 Gewichtsprozent Fasern, insbesondere Mineralwollfasern, 45 bis 70 Gewichtsprozent Aerogelpartikel und 8 bis 12 Gewichtsprozent Bindemittel zu der Platte gepresst und gehärtet werden, die über eine Dichte von 130 kg/m³ bis 200 kg/m³ verfügt, als isolierendes Element zur inneren Isolierung von Fenster- und Türöffnungen, in Bereichen hinter Heizkörpern, Isolierung unter Fußböden und/oder äußeren Isolierung von Gebäudefassaden.

12. Verfahren zur Herstellung eines isolierenden Bauelements, wobei das genannte Verfahren die folgenden Schritte umfasst:
Bereitstellen eines Gemisches aus 20 bis 40 Gewichtsprozent Fasern, insbesondere Mineralwollfasern, 45 bis 70 Gewichtsprozent Aerogelpartikeln und 8 bis 12 Gewichtsprozent mindestens eines Bindemittels,
Pressen des Gemisches in die Form einer Platte mit einer Dichte von 130 kg/m³ bis 200 kg/m³, und
Härten der Platte.

13. Verfahren nach Patentanspruch 11, in dem das Gemisch auf einer Schicht gesammelt wird, die als Traggewebe dient und wobei das Gemisch mit der das Traggewebe bildenden Schicht zusammen gepresst und gehärtet wird.

14. Verfahren nach Patentanspruch 11, in dem mindestens zwei Platten nach dem Pressen und Härten aneinander befestigt werden, insbesondere durch Kleben.

15. Verfahren nach Patentanspruch 11, in dem mindestens eine Platte an einer Gipsplatte befestigt wird, um ein Wärmeisolierungsverbundsystem zu schaffen.

## Revendications

1. Elément de construction isolant composé d'au moins un panneau comprenant des fibres, des particules d'aérogel et au moins un liant, 20 à 40 pour-cent en poids de fibres de laine minérale, 45 à 70 pour-cent en poids de particules d'aérogel et 8 à 12 pour-cent en poids de liant étant pressées et solidifiées en un panneau ayant une densité de 130 kg/m³ à 200 kg/m³.

2. Elément selon la revendication 1, le panneau ayant une conductivité thermique λ de moins de 0,022 W/(mK).

3. Elément selon l'une quelconque des revendications précédentes, le panneau ayant une densité de 180 kg/m³ et une conductivité thermique λ de moins de 0,019 W/(mK) ou moins et le panneau comprenant jusqu'à 30 pour-cent en poids de fibres, en particulier de fibres de laine minérale, 50 à 70 pour-cent en poids de particules d'aérogel, en particulier de particules d'aérogel hydrophobe et jusqu'à 10 pour-cent en poids de liant.

4. Elément selon l'une quelconque des revendications précédentes, le liant étant un liant sec, en particulier un liant polaire.

5. Elément selon l'une quelconque des revendications précédentes, le panneau ayant une résistance à la compression d'au moins 5kPa et/ou une résistance au délaminage d'au moins 1 kPa.

6. Elément selon la revendication 1, le panneau ayant une épaisseur de moins de 30 mm, en particulier de 20 mm ou de 10 mm.

7. Elément selon la revendication 1, les fibres de laine minérale étant faites de fibres de verre et/ou de roche.

8. Elément selon la revendication 1, au moins deux panneaux étant fixés l'un à l'autre, en particulier par collage.

9. Elément selon la revendication 1, au moins une surface principale du panneau étant reliée à une couche de couverture telle qu'une nappe, en particulier une nappe mince tissée ou non tissée faite de fibres de verre.

10. Elément selon la revendication 1, le panneau étant relié à un panneau de gypse créant un élément sandwich, en particulier comme système composite d'isolation.

11. Utilisation d'un élément de construction isolant composé d'au moins un panneau comprenant des fibres, des particules d'aérogel et au moins un liant, 20 à 40 pour-cent en poids de fibres de laine minérale, 45 à 70 pour-cent en poids de particules d'aérogel et 8 à 12 pour-cent en poids de liant étant pressées et solidifiées en un panneau ayant une densité de 130 kg/m³ à 200 kg/m³ comme élément isolant pour l'isolation intérieure des ouvertures de portes et fenêtres, dans des zones derrière des radiateurs, l'isolation sous des sols et/ou l'isolation extérieure de façades de bâtiment.

12. Procédé de fabrication d'un élément de construction isolant, le dit procédé comprenant les étapes de :
fournir un mélange de 20 à 40 pour-cent en poids de fibres de laine minérale, 45 à 70 pour-cent en poids de particules d'aérogel et 8 à 12 pour-cent en poids d'au moins un liant,
presser le mélange en forme de panneau ayant une densité de 130 kg/m³ à 200 kg/m³
et
solidifier le panneau.

13. Procédé selon la revendication 11, le mélange étant recueilli sur une couche formant une nappe porteuse et le mélange étant pressé et solidifié ensemble avec la couche formant la nappe porteuse.

14. Procédé selon la revendication 11, au moins deux panneaux étant fixés ensemble après avoir été pressés et solidifiés, en particulier par collage.

15. Procédé selon la revendication 11, au moins un panneau étant fixé à un panneau de gypse pour fournir un système composite d'isolation thermique.
